# EUROPEAN PATENT APPLICATION

(11) **EP 3 739 542 A1**
(43) Date of publication of application: **18.11.2020**
(21) Application number: 19183470.4
(22) Date of filing: 28.06.2019
(51) Int. Cl.: G06Q 30/06

(54) **VISUAL PURCHASING SYSTEM AND IMPLEMENTATION METHOD THEREOF**

(30) Priority: 13.05.2019 TW 108116401
(71) Applicant: Chuang, Lien Hao, Kaohsiung City 806 (TW)
(72) Inventor: Chuang, Lien Hao, Kaohsiung City 806 (TW)
(74) Representative: Lang, Christian

(57) **Abstract**

Disclosed are a visual purchasing system and its implementation method. A mobile device performs an image recognition and analysis of an item, a physical product, a commodity propaganda or a picture to obtain product feature information, and compares the similarity between the product feature information and a sample feature of a feature encrypted database. If the comparison passes, users may check the item information corresponding to the image information at the mobile device and add the item information into a purchasing list belonged to the mobile device. After a checkout action is confirmed, the mobile device shows a payment code, or the consumer chooses to make payment by a system registered and verified payment method. The invention can save the consumers' time for purchasing, inquiring products, inquiring sales locations, and confirming products and complete the operations of item confirmation, purchasing list, checkout and mobile payment.

## Description

### BACKGROUND OF INVENTION

### (1) Field of the Invention

The present disclosure relates to the technical fields of cloud computing, image encryption, and image recognition, more particularly to a visual purchasing system and its implementation method that allow users to complete confirming an item, adding the item into a purchasing list and making a mobile payment through the mobile device immediately after a mobile device captures an image of an item, a physical product, a commodity propaganda or a picture.

### (2) Brief Description of Related Art

As the development of communication technologies and the Internet advances, many consumers use a smartphone or an electronic ticket as a main tool of mobile payment. For example, a near field communication (NFC) or a mobile barcode (such as Barcode or QR Code) are used for confirming an order information, and making a payment immediately, wherein the entry barrier of mobile barcode is very low, and thus almost all smartphones can use the mobile barcode, and the consumers just need to carry the smartphone or electronic ticket to make a mobile payment to merchants, and related prior arts include Taiwan Patent No. TW201837806A entitled "Multidimensional barcode mobile payment method, buyer device and payment servo mechanism capable of verifying validity of the transaction in real time to ensure safe transaction", and Taiwan Patent No. TWI601079 entitled "Mobile payment system and its implementing method".

Although the mobile payment brings tremendous convenience to consumers, a consumer still has to confirm the price of the product on the shelf and check whether or not the product item on the shelf is the one the consumer takes when the consumer purchases products in a physical shop, so as to avoid the problem of having a wrong price estimation if the merchant labels a wrong pricing. If the consumer purchases a large quantity of products and checks out at the counter or the merchant needs to scan the product barcodes of the purchased products one by one and takes much time on scanning the product barcodes and operating a POS machine. As a result, the consumer's waiting time in a queue will be increased.

In addition, the consumer still has to check the content of a product from the merchant or log on the Internet to check related data whenever the product information is unclear. Obviously, the conventional purchasing method is very inconvenient and has the issue of poor consuming experience and checkout efficiency.

Therefore, it is a primary objective of the present disclosure to provide a visual purchasing system to overcome the problem of the prior art incapable of providing sufficient product information, and the visual purchasing system provides better consuming experience, and has the effects of improving the merchant's checkout efficiency, providing a safer payment method, and reducing the consumer's waiting time in a queue.

### SUMMARY OF INVENTION

To achieve the above-mentioned objective, a visual purchasing system capable of obtaining image information from a mobile device having an application program comprises: a central processing module, a product identification module, a feature encrypted database, a product database, a member database and a communication module.

The product identification module is provided for performing an image analysis of the image information captured by the mobile device to obtain product feature information and then performs a similarity comparison with a plurality of sample feature information stored in the feature encrypted database. If the result of the similarity comparison passes, the central processing module will search a plurality of item information stored in the product database to find out one of the item information matched with the comparison result and add the item information into a purchasing list stored in the member database, and the purchasing list is belonging to the mobile device, and the item information and the purchasing list matched with the comparison result are sent to the mobile device. At last, the central processing module is provided for calling the mobile device through the communication module to display the item information at a product information interface of the application program, and the mobile device shows the purchasing list at a purchasing list interface of the application program.

The visual purchasing system allows a consumer to immediately complete an item confirmation at the mobile device, add an item in the purchasing list and make a mobile payment, or the consumer makes a payment by choosing other system registered and verified payment methods directly, not just improving the effect of the consumer's purchasing experience only, but also improving the purchasing/trading performance significantly.

### BRIEF DESCRIPTION OF THE DRAWINGS

Fig. 1 is a system block diagram of the present disclosure;
Fig. 2 is a flow chart of an implementation method of the present disclosure;
Fig. 3 is a first schematic view of a system interface of the present disclosure;
Fig. 4 is a second schematic view of a system interface of the present disclosure;
Fig. 5 is a third schematic view of a system interface of the present disclosure;
Fig. 6 is a fourth schematic view of a system interface of the present disclosure;
Fig. 7 is a system block diagram of a first embodiment of the present disclosure;
Fig. 8 is a schematic view of a system interface in accordance with the first embodiment of the present disclosure;
Fig. 9 is a system block diagram of a second embodiment of the present disclosure; and
Fig. 10 is a schematic view of a system interface in accordance with the second embodiment of the present disclosure.

### DETAILED DESCRIPTION OF PREFERRED EMBODIMENTS

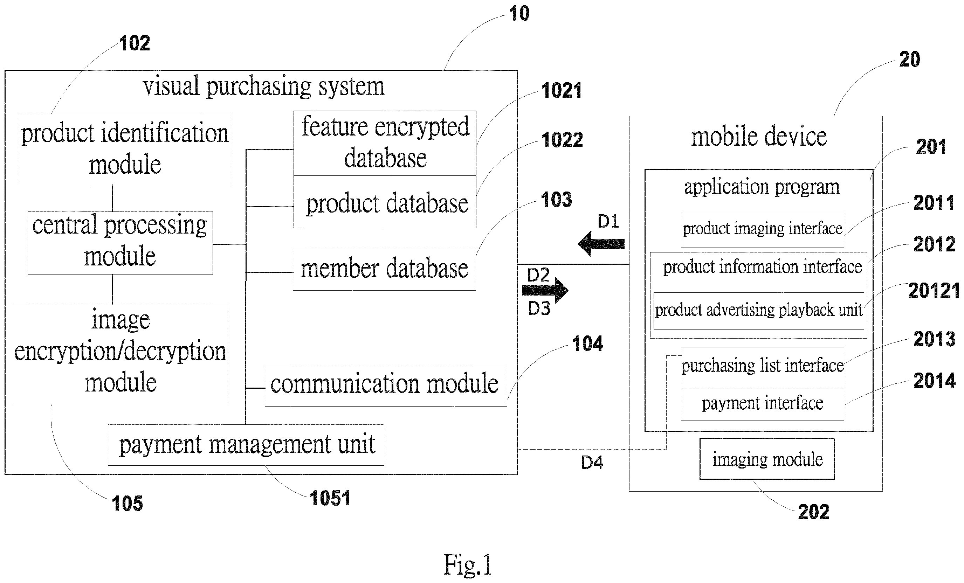

With reference to Fig. 1 for a visual purchasing system 10 of the present disclosure, the visual purchasing system 10 is capable of obtaining an image information D1 from a mobile device 20, and the visual purchasing system 10 comprises: a central processing module 101, a product identification module 102, a feature encrypted database 1021, a product database 1022, a member database 103, a communication module 104 and an image encryption/decryption module 105, and the product identification module 102, the feature encrypted database 1021, the product database 1022, the member database 103, the communication module 104 and the image encryption/decryption module 105 are coupled to the central processing module 101, wherein:
(1) The visual purchasing system 10 may be a physical sever, a physical server operating in form of a virtual machine, or a physical server operating in form of a virtual private server.
(2) The central processing module 101 is provided for operating the visual purchasing system 10 and controlling the execution of each of the aforementioned modules, and the central processing module 101 has the function of executing a logic operation, temporarily storing the operation result, and saving the execution instruction position, and it may be a central processing unit (CPU).
(3) The product identification module 102 is provided for performing an image analysis of image information D1 captured by the mobile device 20 to obtain product feature information, and a similarity comparison between the product feature information with a plurality of sample feature information stored in a feature encrypted database 1021.
(4) The image analysis executed by the product identification module 102 includes image analysis and processing operation such as Image Preprocessing Algorithm, Feature Extraction Algorithm, Region Segmentation Algorithm, etc., wherein the product feature of the image information D1 is identified. In the aforementioned Image Preprocessing Algorithm, a binary operation, an erosion operation, a dilation operation, an opening operation, or a closing operation is carried out to eliminate noises or enhance the detail of images. In the aforementioned feature extraction algorithm, image features such as appearance and profile are identified. In a preferred embodiment of the present disclosure, the product identification module 102 is based on a deep learning algorithm or a machine learning algorithm, and a mobile device 20 is provided to collect a large quantity of image information D1, so as to improve the accuracy of the aforementioned image analysis such as the Image Preprocessing and the Feature Extraction.
(5) When the similarity comparison test is passed, such result shows that the similarity between the product feature information and the sample feature information determined by the product identification module 102 relatively high, and the central processing module 101 may further carry out a search of a plurality of item information stored in the product database 1022 to find one of the item information D2 that is matched with the comparison result and add such item information D2 into a purchasing list D3 stored in the member database 103, and the purchasing list D3 is belonging to the mobile device 20 and the item information and purchasing list matched with the comparison result are sent to the mobile device 20.
(6) The feature encrypted database 1021 has a plurality of sample feature information stored therein, and the product database 1022 has a plurality of item information stored therein, and these information are associated with the sample feature information, wherein the item information may be a product name, a product image, a selling price information, a product description, or a product video or any combination of the above.
(7) The communication module 104 is provided for carrying out a communication with the mobile device 20, and the mobile device 20 has an imaging module 202, an application program 201 capable of controlling the execution of the imaging module 202 after being triggered, wherein the communication module 104 is a Wi-Fi, Bluetooth, Zigbee, NFC, 3G/4G, or Ethernet transmission interface or any combination of the above, and the imaging module 202 has an imaging lens and a CMOS/CCD Image Sensor.

In Fig. 1, the image encryption/decryption module 105 has a payment management unit 1051, wherein:
(1) When the image encryption/decryption module 105 is used by users to execute the application program 201 for the first time, an original image of an electronic ticket image is encrypted, and then the encrypted information is stored, wherein the encrypted information includes but not limited to steganography algorithms such as Quantization Index Modulation (QIM), Vector Quantization(VQ), Quantization Index Modulus Modulation (QIMM), or Least Significant Bit (LSB), or any combination of the above, which are hidden in the original electronic ticket image.
(2) When a user wants to make a mobile payment, a device at a merchant end is provided for capturing an electronic ticket image (which is processed by an image synthesis of the image encryption/decryption module 105 and embedded into the encrypted information) provided by the mobile device 20, and encrypting the electronic ticket image by the image encryption/decryption module 105.
(3) When, the image encryption/decryption module 105 carries out an encryption, a pixel difference between two electronic ticket images is compared; or a decoding tool (such as StegSolve) is used to carry out a multiple channel scan (such as RGB Color Space scan) of the electronic ticket image to confirm and determine whether or not there is an encrypted information hidden in the lowest bit of a certain color in the electronic ticket image; or examine the attribute information of the electronic ticket image to confirm and determine whether or not a String such as Key and Flag embedded with the encrypted information in the electronic ticket image to drive the payment management unit 1051 to carry out the verification.
(4) The payment management unit 1051 is capable of determining whether or not the image encryption/decryption module 105 has matched encrypted information stored therein, so as to verify whether or not the electronic ticket of the mobile device 20 is real and confirm the type of the payment tool.
(5) The aforementioned encrypted information has a data structure with different data types such as integer, float, character, Boolean value and byte. Specifically, the encrypted information may be a digital image, a module in pixels, text datum, or a timestamp, or a combination of the above.

In Fig. 1, the mobile device 20 has an application program 201 installed therein, and connected with the visual purchasing system 10 via a network connection. The application program 201 provides a product imaging interface 2011, a product information interface 2012, a product advertising playback unit 20121, a purchasing list interface 2013 and a payment interface 2014:
(1) After the mobile device 20 receives the item information D2 and the purchasing list D3 matched with the comparison result from the visual purchasing system 10, the central processing module 101 calls the mobile device 20 by the communication module 104 to drive the product information interface 2012 of the application program 201 to display the item information D2. After the product advertising playback unit 20121 disposed at the product information interface 2012 is triggered, the mobile device 20 plays a product audio/video advertising corresponding to the item information D2 at the product information interface 2012 of the application program 20; or the mobile device 20 displays the purchasing list D3 at the purchasing list interface 2013 of the application program 201, and the mobile device 20 may adjust the item information D2 of the purchasing list D3 at the purchasing list interface 2013 or the purchase quantity associated with the item information D2 such as decreasing the purchase quantity.
(2) When the user of the mobile device 20 confirms to check out, the user confirms the checkout action by switching the mobile device 20 to the payment interface 2014 of the application program 201 to allow the mobile device 20 to show a payment code D4 at the payment interface 2014, and a device at a merchant end scans and captures the payment code D4 to collect payment, or the user may choose other system registered and verified payment methods directly for collecting the payment, wherein the payment code D4 is a barcode, a two-dimensional barcode or an electronic ticket image embedded with an encrypted information, or any other payment code registered and verified by the system.

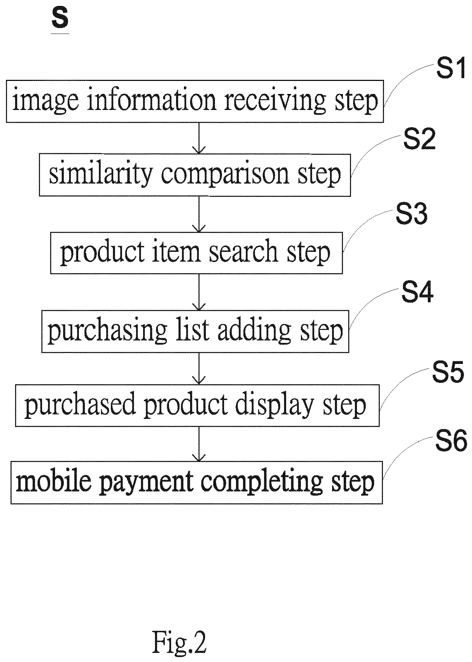

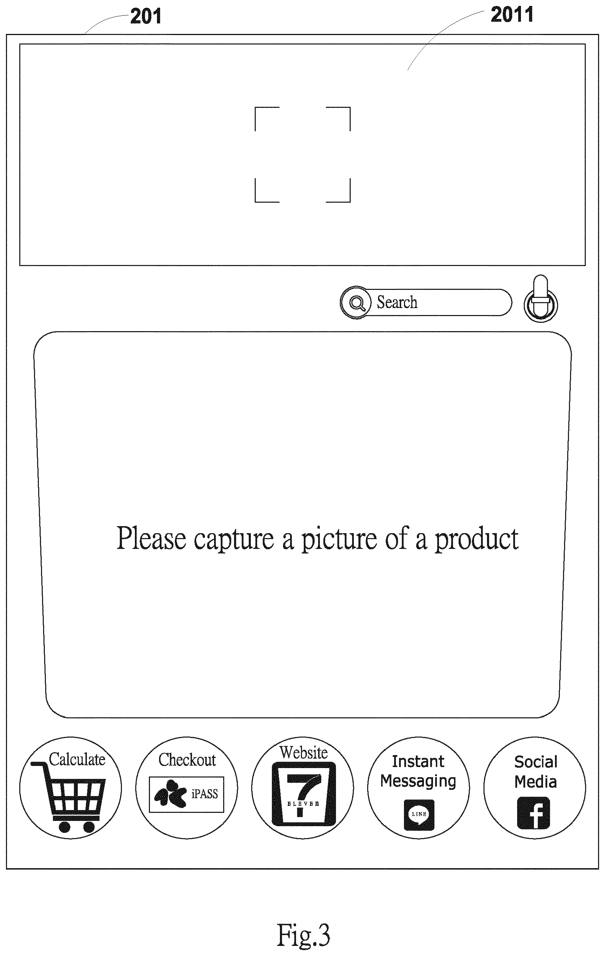

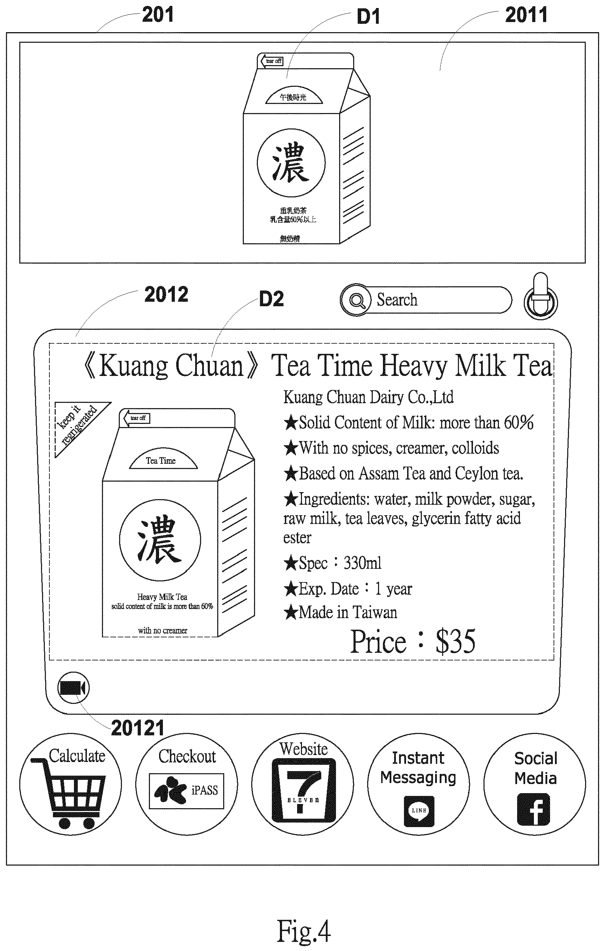

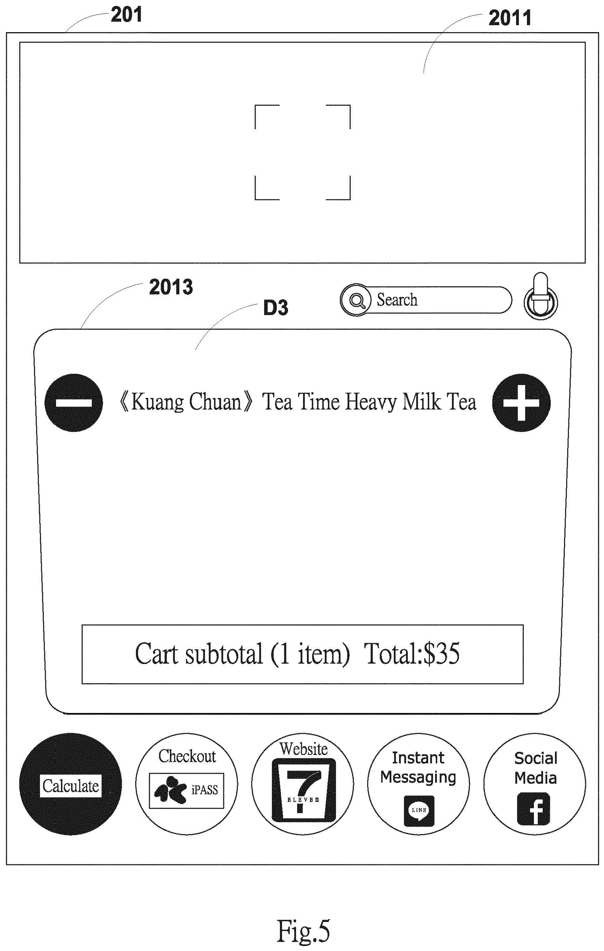

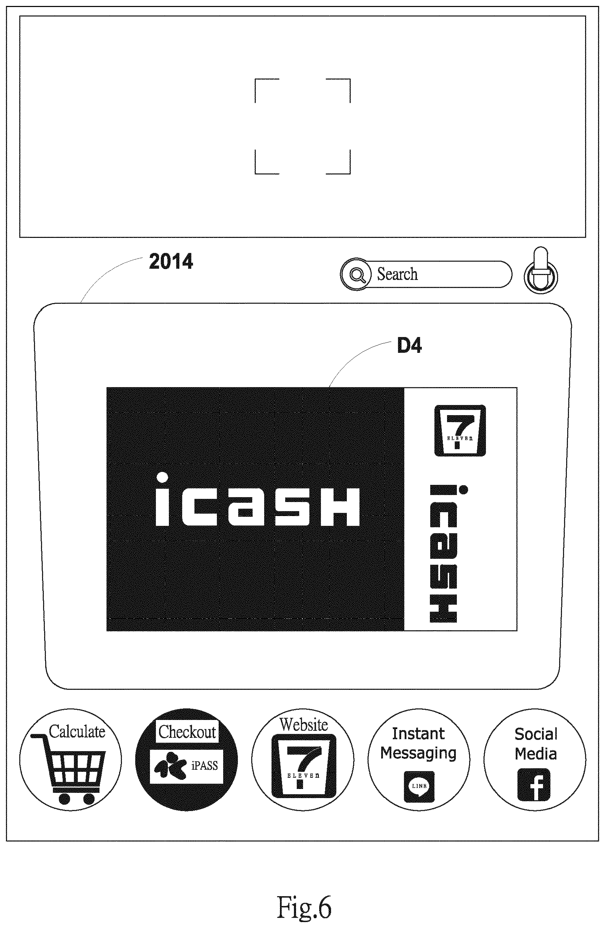

With reference to Fig. 2 as well as Figs. 1 and 3 to 6 for an implementation method S of a visual purchasing system in accordance with the present disclosure, the implementation method S comprises the following steps:
(S1) Image Information Receiving Step: A communication module 104 receives image information D1 captured by a mobile device 20, wherein the mobile device 20 captures an image (including a 2D image and a 3D image) of an item, physical product, a commodity propaganda or a picture at a product imaging interface 2011 provided by an application program 201. In Fig. 3, the mobile device 20 captures an image of a physical product, and before the step (S1) takes place, an image encryption/decryption module 105 encrypts a not-yet encrypted electronic ticket image, and stores the encrypted information.
(S2) Similarity Comparison Step: A product identification module 102 performs an image analysis of the image information D1 to obtain product feature information, and then performs a similarity comparison of the product feature information with a plurality of sample feature information stored in a feature encrypted database 1021.
(S3) Product Item Search Step: If the result of the step (S2) is passed (indicating the product identification module 102 determines that the product feature information and the sample feature information are very similar to each other), a central processing module 101 will perform a search for a plurality of item information stored in a product database 1022 to find out one of the item information D2 matched with the comparison result.
(S4) Purchasing List Adding Step: After the step (S3), the central processing module 101 adds the searched item information D2 into a purchasing list D3 stored in a member database 103 and sends the item information D2 and the purchasing list D3 matched with the comparison result to the mobile device 20.
(S5) Purchased Product Display Step: The central processing module 101 uses the communication module 104 to call the mobile device 20 to display item information D2 at a product information interface 2012 of the application program 201 as shown in Fig. 4. In a preferred embodiment of the present disclosure, when this step is executed and after a product advertising playback unit 20121 disposed at the product information interface 2012 is triggered, the mobile device 20 plays a product audio/video advertising corresponding to the item information D2 at the product information interface 2012 of the application program 201; and the central processing module 101 also uses the communication module 104 to drive the mobile device 20 to switch to a purchasing list interface 2013 of the application program 201 to display the purchasing list D3 as shown in Fig. 5.
(S6) Mobile Payment Completing Step: After the step (S5), the central processing module 101 uses the communication module 104 to drive the mobile device 20 to show a payment code D4 at a payment interface 2014 and a device at a merchant end scans and captures the payment code D4 to collect payment as shown in Fig. 6, wherein the payment code D4 is a barcode, a two-dimensional barcode (such as a QR Code) or an electronic ticket image embedded with an encrypted information, but the invention is not limited to such arrangement. In addition, an image encryption/decryption module 105 decrypts the electronic ticket image embedded with the encrypted information and shown by the mobile device 20 to verify whether or not belonging to an electronic ticket of the mobile device 20 is real.

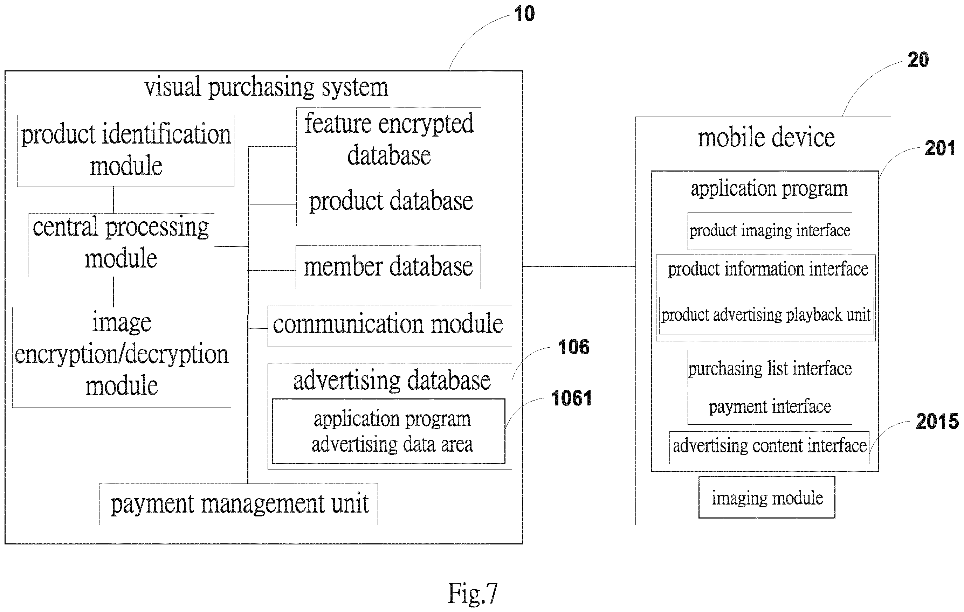

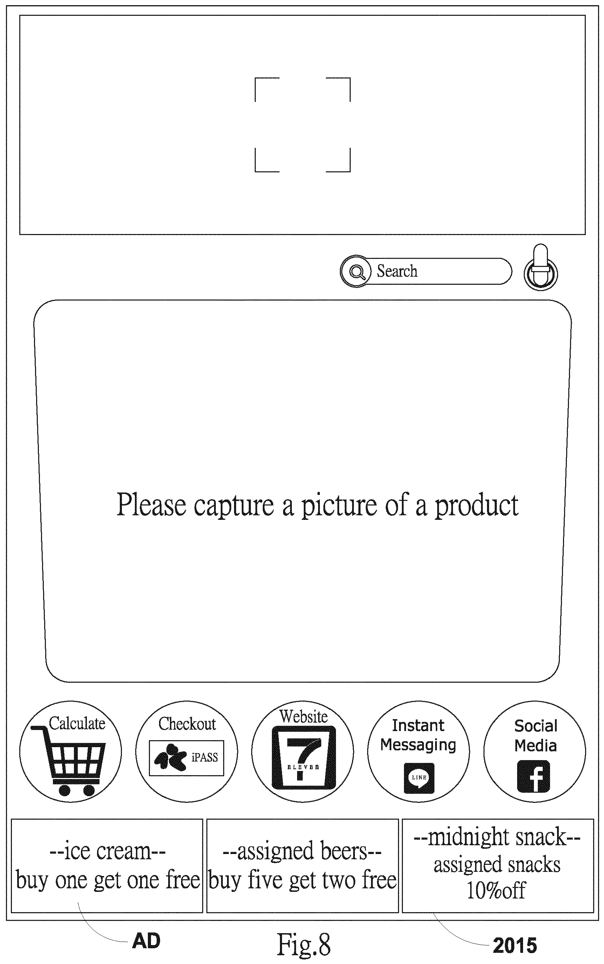

With reverence to Figs. 7 and 8 for a visual purchasing system 10 in accordance with a preferred embodiment of the present disclosure, the visual purchasing system 10 further comprises an advertising database 106 coupled to the central processing module 101, and the application program 201 executed by the mobile device 20 provides an advertising content interface 2015, and the advertising database 106 is provided for storing a plurality of application program advertising AD corresponding to different merchants in an application program advertising data area 1061, and before the mobile device 20 captures an image (or before the step (S1) as shown in Fig. 2 takes place), the central processing module 101 calls the mobile device 20 to display each application program advertising AD at the advertising content interface 2015, wherein the type of the application program advertising AD may be an AD Banner as shown in Fig. 8, but the invention is not limited to such arrangement.

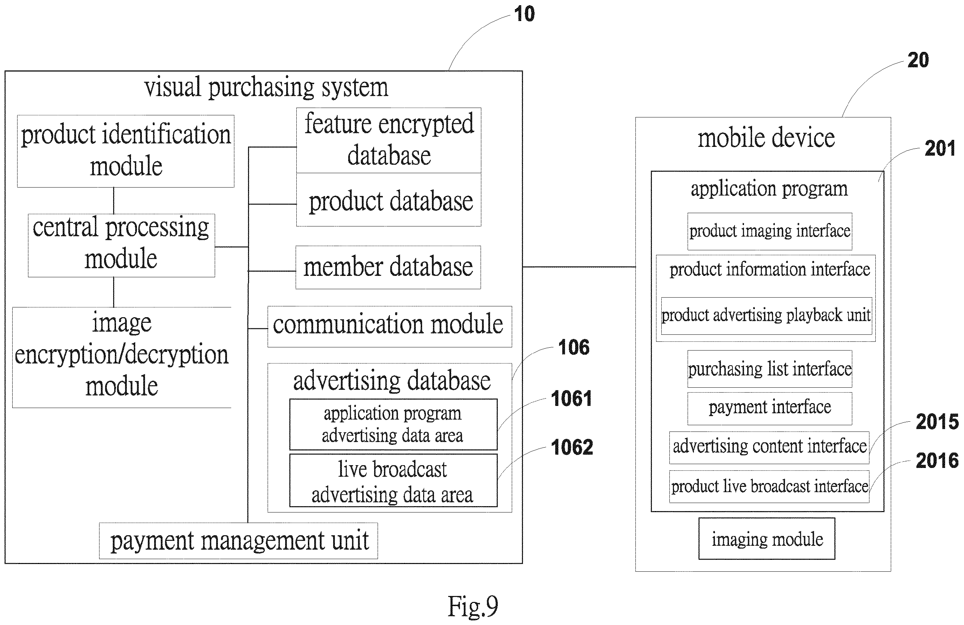

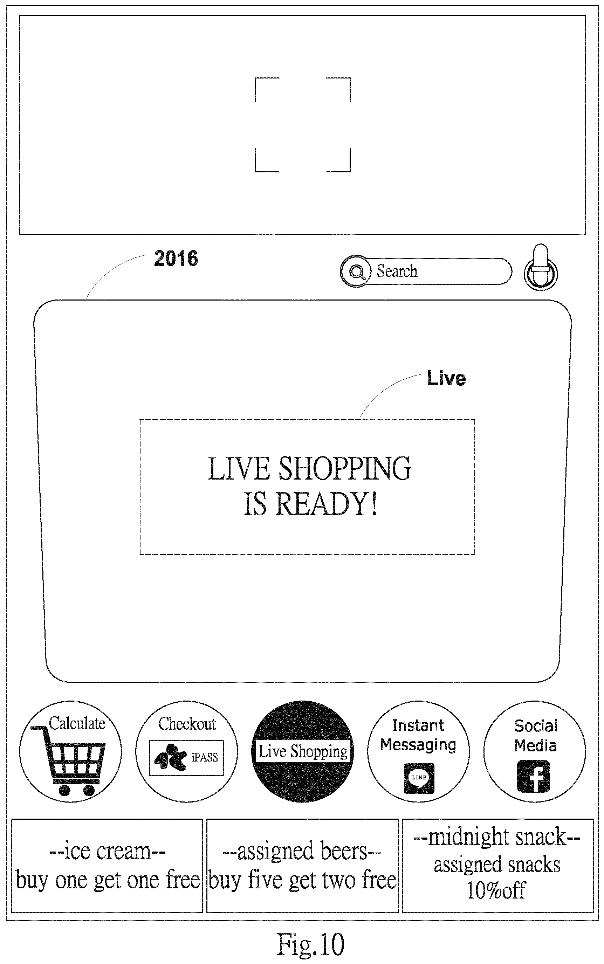

With reference to Figs. 9 and 10 for a preferred embodiment of the present disclosure, the advertising database 106 of the visual purchasing system 10 stores a plurality of live broadcast advertising Live corresponding to different merchants in a live broadcast advertising data area 1062, and the application program 201 executed by the mobile device 20 provides a product live broadcast interface 2016, and before the mobile device 20 captures an image (or before the step (S1) as shown in Fig. 2 takes place), the central processing module 101 calls the mobile device 20 to play the live broadcast advertising Live at the product live broadcast interface 2016 as shown in Fig. 10. If the result of the similarity comparison executed by the product identification module 102 is passed, the item information and the purchasing list matched with the comparison result will be sent to the mobile device 20 and the central processing module 101 will directly call the mobile device 20 to play the live broadcast advertising Live of the image information D1 at the product live broadcast interface 2016, or to play the live broadcast advertising Live corresponding to the consumer's desired product, so as to achieve the effect of playing the live broadcast advertising accurately.

In summation of the description above, the visual purchasing system of the present disclosure does not require merchants to scan the product barcodes one by one and allows consumers to immediately complete the item conformation at the mobile device, add a purchasing list, and makes a mobile payment more safely, and the invention can achieve the advantageous effects of improving consuming experience and trading efficiency and reducing the consumers' waiting time in a queue. In the meantime, the invention can overcome the drawbacks of the conventional purchasing that the consumers have to check the price of the products on the shelf and confirm whether or not the product taken by the consumer corresponds to the product item on the shelf to avoid the problem of a wrong price estimation caused by labelling the wrong price by the merchant.

While the present disclosure has been described by preferred embodiments in conjunction with accompanying drawings, it should be understood that the embodiments and the drawings are merely for descriptive and illustrative purpose, not intended for restriction of the scope of the present disclosure. Equivalent variations and modifications performed by person skilled in the art without departing from the spirit and scope of the present disclosure should be considered to be still within the scope of the present disclosure.

## Claims

1. A visual purchasing system, capable of obtaining image information from a mobile device having an application program, comprising: a central processing module, a product identification module, a feature encrypted database, a product database, a member database and a communication module, and the product identification module, wherein, the feature encrypted database, the product database, the member database and the communication module being coupled to the central processing module;
the product identification module being provided for performing an image analysis of the image information captured by the mobile device to obtain product feature information and then performing a similarity comparison with a plurality of sample feature information stored in the feature encrypted database;
if the result of the similarity comparison passes, the central processing module will search a plurality of item information stored in the product database to find out one of the item information matched with the comparison result and add the item information into a purchasing list stored in the member database, and the purchasing list is belonged to the mobile device, and the item information and the purchasing list matched with the comparison result are sent to the mobile device; and
the central processing module, provided for calling the mobile device through the communication module to display the item information at a product information interface of the application program, and the mobile device showing the purchasing list at a purchasing list interface of the application program.

2. The system of claim 1, wherein the application program provides a payment interface for letting the mobile device show a payment code after the application program is triggered, and the payment code is a barcode, a two-dimensional barcode or an electronic ticket image embedded with encrypted information.

3. The system of claim 1, wherein the application program provides a product advertising playback unit disposed at the product information interface, and after the application program is triggered, the mobile device plays a product audio/video advertising corresponding to the item information at the product information interface of the application program.

4. The system of claim 3, further comprising an advertising database coupled to the central processing module, and the application program providing an advertising content interface, and the advertising database being provided for storing a plurality of application program advertising corresponding to different merchants, and the central processing module being provided for calling the mobile device to display each of the application program advertising at the advertising content interface.

5. The system of claim 3, further comprising an advertising database coupled to the central processing module, and the application program providing a product live broadcast interface, and the advertising database being provided for storing a plurality of live broadcast advertising corresponding to different merchants, and the central processing module being provided for calling the mobile device to play the live broadcast advertising at the product live broadcast interface.

6. The system of claim 2, further comprising an image encryption/decryption module coupled to the central processing module for encrypting the not-yet encrypted electronic ticket image, storing the encrypted information, and decrypting the electronic ticket image embedded with the encrypted information and displayed by the mobile device to verify whether or not an electronic ticket belonging to the mobile device is real.

7. An implementation method of a visual purchasing system, comprising:
an image information receiving step, wherein a communication module receives image information captured by a mobile device,
a similarity comparison step, wherein a product identification module performs an image analysis of the image information to obtain product feature information, and performs a similarity comparison with a plurality of sample feature information stored in a feature encrypted database;
a product item search step, wherein if the result of the similarity comparison is passed, a central processing module will perform a search for a plurality of item information stored in a product database to find out one of the item information matched with the comparison result;
a purchasing list adding step, wherein the central processing module adds the searched item information into a purchasing list stored in a member database, and the purchasing list is belonged to the mobile device, and the central processing module sends the item information and the purchasing list matched with the comparison result to the mobile device; and
a purchased product display step, wherein the central processing module uses the communication module to call the mobile device to display the item information at a product information interface of the application program, and switches the mobile device to a purchasing list interface of the application program to display the purchasing list.

8. The method of claim 7, wherein after the purchased product display step takes place, a mobile payment completing step follows, and the central processing module uses the communication module to drive the mobile device to show a payment code at a payment interface, and the payment code is a barcode, a two-dimensional barcode or an electronic ticket image embedded with an encrypted information.

9. The method of claim 7, wherein after the purchased product display step takes places, a product advertising playback unit disposed at the product information interface may be triggered to drive the mobile device to play a product audio/video advertising corresponding to the item information at the product information interface of the application program.

10. The method of claim 7, wherein before the image information receiving step takes place, the central processing module calls the mobile device to display a plurality of application program advertising at an advertising content interface of the application program, or the central processing module calls the mobile device to play a live broadcast advertising at a product live broadcast interface of the application program.

11. The method of claim 8, wherein before the mobile payment completing step takes place, an image encryption/decryption module encrypts the electronic ticket image embedded with the encrypted information and displayed by the mobile device, so as to verify whether or not an electronic ticket belonging to the mobile device is real.

12. The method of claim 11, wherein before the image information receiving step takes place, the image encryption/decryption module encrypts the not-yet encrypted electronic ticket image by a steganography algorithm and stores the encrypted information produced after the encryption.
